# EUROPEAN PATENT SPECIFICATION

(11) **EP 4 283 753 B1**
(45) Date of publication and mention of the grant of the patent: **17.12.2025**
(21) Application number: 22792078.2
(22) Date of filing: 25.04.2022
(51) Int. Cl.: H01M 10/44, H01M 10/052, H01M 4/04, H01M 10/0568, H01M 10/0569

(54) **METHOD FOR MANUFACTURING SECONDARY BATTERY**
VERFAHREN ZUR HERSTELLUNG EINER SEKUNDÄRBATTERIE
PROCÉDÉ DE FABRICATION DE BATTERIE SECONDAIRE

(30) Priority: 23.04.2021 KR 20210053323
(43) Date of publication of application: 29.11.2023
(73) Proprietor: LG Energy Solution, Ltd., Seoul 07335 (KR)
(72) Inventor: CHA, In-Young, Daejeon 34122 (KR); KIM, So-Hee, Daejeon 34122 (KR); BAE, Joon-Sung, Daejeon 34122 (KR); SUNG, Nak-Gi, Daejeon 34122 (KR); YU, Sung-Hoon, Daejeon 34122 (KR)
(74) Representative: Goddar, Heinz J.
(86) International application number: PCT/KR2022/005884
(87) International publication number: WO 2022/225380

(56) References cited:
- EP-A1- 3 800 719
- EP-A1- 3 886 236
- WO-A1-2015/068017
- JP-B2- 6 760 213
- KR-A- 20200 084 510
- KR-A- 20200 142 176
- KR-A- 20210 030 000
- KR-A- 20210 030 000
- KR-A- 20210 032 205
- US-A1- 2018 316 040

## Description

### TECHNICAL FIELD

The present disclosure relates to a method for manufacturing an electrochemical device. Particularly, the present disclosure relates to an initial charging/discharging method in a battery activation step.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such a secondary battery is subjected to an activation step of charging/discharging the battery, after the electrodes are bound with a separator to form an electrode assembly, and the electrode assembly is introduced to a battery casing. According to the related art, the activation step is carried out through the steps of [pre-aging → initial charging → main aging → capacity and defect test]. After the initial charging, the electrodes undergo degradation of uniformity due to the gases remaining in the membrane-electrode assembly, and thus the available capacity of the battery is reduced, and a long time is required for voltage stabilization to cause an increase in time required for the defect test. The above-mentioned problems become severe in the case of cylindrical or prismatic batteries having a difficulty in application of a degassing step for removing such residual gases. Therefore, there is a need for improvement of the charging process in the activation step during the conventional battery manufacturing process in order to solve the above-mentioned problems.

EP 3 800 719 A1 discloses a method for manufacturing a secondary battery, comprising a pre-aging step at room temperature, a charging step for primarily charging the pre-aged secondary battery to a secondary battery capacity of 60 % or more, a high-temperature aging step for aging the primarily charged secondary battery at a high temperature, and a room-temperature aging step.

EP 3 886 236 A1 is a prior art document pursuant to Art. 54(3) EPC, and also discloses a method for manufacturing a secondary battery, comprising a primary charging step of charging a pre-aged secondary battery to 60% or more of the secondary battery capacity, followed by an ageing step of allowing the product of the step of charging to stand under the condition of 30-80°C for a predetermined time.

### DISCLOSURE

### Technical Problem

The present disclosure is designed to solve the problems of the related art, and therefore the present disclosure is directed to providing a novel battery activation step which can remove gases remaining in a battery to ensure the charging uniformity of the battery.

### Technical Solution

In one aspect of the present disclosure, there is provided a method for manufacturing a secondary battery.

According to the first embodiment of the present disclosure, there is provided a method for manufacturing a secondary battery, including the steps of:
(S1) a first charging step of charging a battery including an electrode assembly and an electrolyte received in a battery casing;
(S2) an aging step of allowing the product of step (S1) to stand under the condition of 30-80°C for a predetermined time; and
(S3) a second charging step of charging the product of step (S2),
wherein the first charging step (S1) is carried out by charging the battery to a range of SOC (state-of-charge) of 5 % to less than 10 %.

Further embodiments are disclosed in the dependent claims.

According to the second embodiment of the present disclosure, there is provided the method for manufacturing a secondary battery as defined in the first embodiment, wherein the battery is maintained at an SOC equal to or more than 0% and less than 1%, before carrying out the step (S1).

According to the third embodiment of the present disclosure, there is provided the method for manufacturing a secondary battery as defined in the first or the second embodiment, which further includes a pre-charging step of charging the battery to a range of SOC of less than 1%, before carrying out the step (S1).

According to the fourth embodiment of the present disclosure, there is provided the method for manufacturing a secondary battery as defined in any one of the first to the third embodiments, wherein the step (S3) includes the steps of:
(S3a) charging the battery to an SOC of less than 100%;
(S3b) an aging step of allowing the product of step (S3a) to stand for a predetermined time; and
(S3c) charging the product of step (S3b) to an SOC of 100%.

According to the fifth embodiment of the present disclosure, there is provided the method for manufacturing a secondary battery as defined in any one of the first to the fourth embodiments, wherein the aging in the step (S2) is carried out for 0.5 hours or more.

According to the sixth embodiment of the present disclosure, there is provided the method for manufacturing a secondary battery as defined in any one of the first to the fifth embodiments, wherein the electrode assembly prepared in the step (S1) includes a negative electrode, a positive electrode and a separator interposed between the negative electrode and the positive electrode, the positive electrode includes a lithium composite metal oxide as a positive electrode active material, and the battery casing has a prismatic or cylindrical shape.

According to the seventh embodiment of the present disclosure, there is provided the method for manufacturing a secondary battery as defined in any one of the first to the sixth embodiments, wherein the electrolyte in the step (S1) includes an organic solvent and a lithium salt, and the organic solvent includes at least one of linear carbonates, linear esters and linear ethers.

### Advantageous Effects

According to the present disclosure, a battery is charged to a low SOC level upon the initial charging of the battery, and then a high-temperature aging step is carried out, in the activation step. In this manner, the gases generated in the battery may not remain in the electrode assembly but may be discharged to the outside of the electrode assembly. Particularly, since the battery is charged to a low SOC level, the electrodes undergo a low degree of swelling to facilitate ensuring a flow path through which the gases can be transported. In addition, the electrolyte has a reduced viscosity through the high-temperature aging, thereby making it easy to transport the gases in the electrode assembly. Therefore, the method for manufacturing a battery according to the present disclosure provides improved charging uniformity, because charging is carried out and finished, after the gases generated in the activation step are removed, while not remaining in the electrode assembly, resulting in an increase in available capacity. In addition, the method according to the present disclosure is advantageous in that it shows a low battery defect generation ratio and a high yield.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIGS. 1a and 1b are schematic views illustrating the conventional battery activation step.
FIGS. 2a and 2b are schematic views illustrating the battery activation step of the method for manufacturing a battery according to an embodiment of the present disclosure.
FIG. 3 illustrates the separator of the battery according to Preparation Example 1.
FIG. 4 illustrates the negative electrode of the battery according to Preparation Example 1.
FIG. 5 illustrates the separator of the battery according to Preparation Example 5.
FIG. 6 illustrates the negative electrode of the battery according to Preparation Example 5.

### BEST MODE

Hereinafter, preferred embodiments of the present disclosure will be described in detail with reference to the accompanying drawings.

The present disclosure relates to a method for manufacturing a secondary battery which includes charging a secondary battery to a low level of SOC (state-of-charge) and carrying out a high-temperature aging step, in the activation step of the secondary battery. According to the present disclosure, 100% of SOC refers to the highest capacity of a battery, and 0% of SOC refers to complete consumption of battery capacity. Herein, SOC may be determined by any suitable method selected from electrochemistry, voltammetry, current integration and manometry. For example, according to the present disclosure, SOC may be determined by voltammetry. The voltammetry includes calculating SOC by comparing the output voltage of a battery with the discharge curve. In the voltammetry, it is possible to increase the accuracy through the correction of a voltage drop value.

According to an embodiment of the present disclosure, the secondary battery may be a lithium metal secondary battery, a lithium-ion secondary battery, a lithium polymer secondary battery or a lithium-ion polymer secondary battery. For example, the secondary battery may be a lithium metal secondary battery using lithium metal as a negative electrode.

The method for manufacturing a secondary battery according to the present disclosure is characterized by charging a secondary battery to a level of SOC of 5 % to less than 10% and carrying out an aging step for a predetermined time, in the activation step. Particularly, the aging step is carried out at a temperature of room temperature or higher. In this manner, gases generated during the charging step do not remain in the battery but may be discharged to the outside of the electrode assembly. Therefore, in the battery charging step carried out subsequently, it is possible to increase the charging uniformity, resulting in improvement of electrochemical properties, such as an increase in discharge capacity.

Hereinafter, the method for manufacturing a secondary battery according to the present disclosure will be explained in detail.

According to an embodiment of the present disclosure, the method for manufacturing a secondary battery includes an activation step of activating the battery, wherein the activation step includes the steps of:
(S1) a first charging step of charging a battery including an electrode assembly and an electrolyte received in a battery casing;
(S2) an aging step of allowing the product of step (S1) to stand under the condition of 30-80°C for a predetermined time; and
(S3) a second charging step of charging the product of step (S2).

Herein, the first charging step (S1) is carried out by charging the battery to a range of SOC (state-of-charge) of 5 % to less than10%.

Hereinafter, each step of the activation step will be explained in detail.

First, a first charging step of charging a battery including an electrode assembly and an electrolyte received in a battery casing is carried out (S1).

According to an embodiment of the present disclosure, the first charging step may be carried out within a range of SOC of 5-10%.

A secondary battery essentially requires an activation step to activate the positive electrode active material and to form a stable surface layer (solid electrolyte interface, SEI) on the negative electrode during the first cycle due to its characteristics. In the activation step, a large amount of gases is generated in the secondary battery. When such gases generated in the secondary battery are not removed efficiently, they occupy a certain space in the secondary battery, cause deformation of the battery and adversely affect the performance, such as capacity and output, and life of the battery.

According to the present disclosure, it has been found that when charging a battery to a predetermined SOC level, most of gases generated in the initial charge are generated. Therefore, the battery is charged to a predetermined SOC level and then aged at high temperature for a predetermined time to allow the gases generated in the battery to be discharged to the outside of the battery. Then, after the gases are removed, the remaining charging process is carried out, thereby ensuring a uniform charging state throughout the whole electrode assembly. Finally, it can be seen that the battery shows improved electrochemical activity.

When the battery is charged to a level less than the above-mentioned SOC range, gas generation is insufficient, and thus gases may be further generated in the subsequent charging step. Meanwhile, when the battery is charged to a level higher than the above-mentioned SOC range, the positive electrode and negative electrode undergo a higher degree of swelling in thickness due to the charging of the battery, thereby making it difficult to ensure a flow path for removing the gases. Therefore, the first charging is controlled preferably to a range of SOC 5 % to less than 10% in order to generate gases as much as possible, while ensuring the flow path for removing gases before the electrodes are swelled excessively. Meanwhile, according to an embodiment of the present disclosure, the first charging is controlled to a range of less than SOC 10% more preferably, considering the swelling of the electrodes.

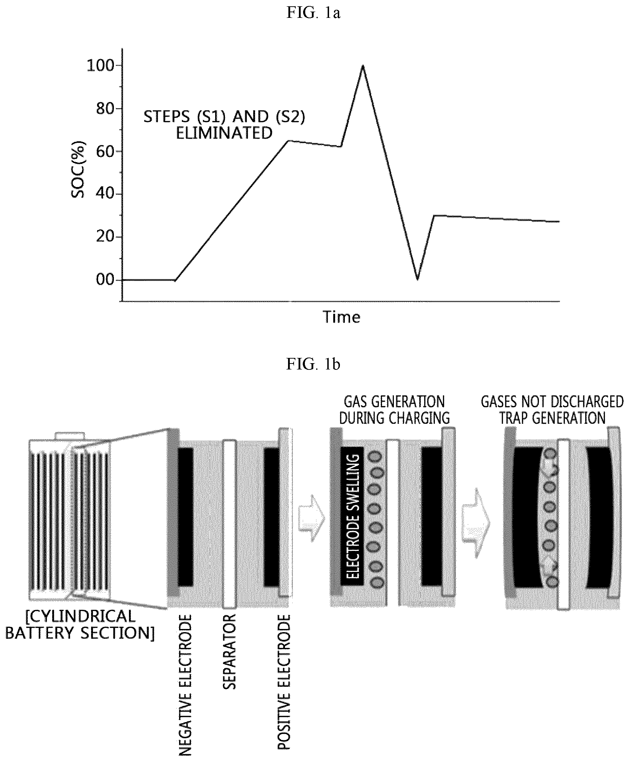

FIG. 1a is a graph illustrating the initial charging step of the conventional activation step as a function of time and state-of-charge (SOC). Referring to FIG. 1a, the first charging step and aging step are not carried out, but the battery is charged continuously to a predetermined range exceeding SOC 10%. FIG. 1b is a schematic view illustrating the mechanism of gas generation and migration in the battery, when the battery is charged in the mode as shown in FIG. 1a. Referring to FIG. 1b, the gases generated in the battery cannot be discharged to the outside of the electrode assembly but remain in the electrode assembly, resulting in deformation of the electrodes, finally.

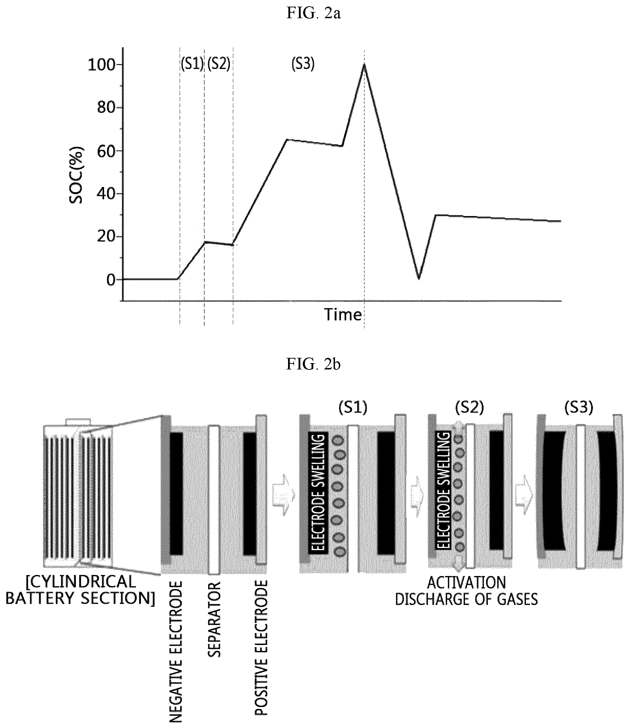

Meanwhile, FIG. 2a is a schematic view illustrating the activation step according to an embodiment of the present disclosure. Referring to FIG. 2a, charging is stopped around at SOC 5% to less than 10% during the activation step, and then an aging step is carried out for a predetermined time. FIG. 2b illustrates the mechanism of gas generation and migration in the battery, when the battery is charged in the same manner as shown in FIG. 2a. Referring to FIG. 2b, gases are generated while the battery is charged to SOC 5-10%, and are discharged to the outside of the electrode assembly during the aging step. As a result, it is possible to prevent deformation of the electrodes, caused by the gases remaining in the electrode assembly. In addition, since the gases do not remain in the electrode assembly but are discharged to the outside of the electrode assembly, the battery shows improved charging uniformity during the subsequent charging step and provides an increased available capacity.

Then, after carrying out step (S1), the product of step (S1) is aged at a temperature of room temperature or higher for a predetermined time. According to an embodiment of the present disclosure, the temperature may be controlled to 30-80°C.

The aging step is a step of accelerating discharge of the gases generated in step (S1) to the outside of the electrode assembly. Herein, when the electrolyte has reduced viscosity and increased flowability, it is possible to facilitate formation of a flow path for discharging the gases in the electrode assembly. Therefore, the aging step is carried out preferably at a temperature higher than room temperature. According to an embodiment of the present disclosure, the temperature may be controlled to 30-80°C. When the temperature is lower than the above-defined range, the viscosity of the electrolyte is not reduced, thereby making it difficult to form a gas flow path. When the temperature is excessively high, the electrolyte or electrochemical element, such as the electrode active material, may be deteriorated, and side reactions, such as reduction/oxidation of the electrolyte, may occur. Therefore, it is preferred that the temperature in the aging step is controlled to the above-defined range.

Meanwhile, according to an embodiment of the present disclosure, the aging step is carried out preferably for 0.5 hours or more, more preferably 1 hour or more. The aging time may be reduced/increased suitably depending on the aging temperature. When the aging step is carried out at a high temperature, it may be carried out preferably for a short period of time so that the electrochemical device may not be exposed excessively to such a high temperature. For example, the aging step may be carried out for 10 hours or less, 7 hours or less, preferably 5 hours or less, or 4 hours or less. However, when the aging time is excessively short, the gases generated in the battery may not be discharged completely but may remain in the electrode assembly. Therefore, it is preferred to ensure a sufficient period of aging time. In other words, the aging time may be set suitably considering the aging temperature and the discharge rate of the gases generated in the battery. According to an embodiment of the present disclosure, the aging time may be affected by the size of the battery. When the battery size is increased, the length of a path through which the gases are transported to the outside may be increased. Therefore, in proportion to such an increase in length, the aging time may be extended.

Meanwhile, according to an embodiment of the present disclosure, the battery may be subjected to a pre-aging step of allowing the battery at room temperature or high temperature for a predetermined time, before carrying out the first charging step after injecting the electrolyte.

Then, after the completion of the aging step, the battery is subjected to the second charging step (S3). In this step, the battery may be charged to a range of SOC 17% or more. Preferably, the second charging step is carried out to a range of SOC 17-100%, and the battery is activated in such a manner that it may be operated by the second charging step. After the second charging step, the secondary battery may show an operating voltage of 4.1 V or higher, depending on the electrode active materials.

According to an embodiment of the present disclosure, the first charging step (S1) may be carried out in a constant current (CC) mode. According to a particular embodiment of the present disclosure, the extent of the charging current during the first charging step may be controlled suitably within a range of 0.05-1 C, considering securement of the charging uniformity and the time required to perform the manufacturing process.

Meanwhile, according to an embodiment of the present disclosure, the method may include a step of discharging the secondary battery to a level of SOC 20% or less, after the second charging step. According to an embodiment, the secondary battery may be discharged to SOC 0%. Herein, the secondary battery may show a voltage of 2.5-4.3 V. It is possible to select the capacity of the battery and to prevent non-uniformity of current density caused by non-uniform distribution of the active materials of the battery, through the discharging step.

Meanwhile, according to an embodiment of the present disclosure, the second charging step may be carried out to SOC 100% without a break, after carrying out step (S2). According to another embodiment, the second charging step may be carried out in multiple steps of charging the battery to a range of SOC of less than 100%, further carrying out aging for a predetermined time, and then charging the battery to a fully charged state (SOC 100%). According to an embodiment of the present disclosure, the second charging step may be carried out to any one point within a range of SOC 50-80%. For example, the second charging step may be carried out by charging the battery to SOC 65%, carrying out aging for a predetermined time, and fully charging the battery. It is possible to provide the battery with improved stability through the aging step. The aging step may be carried out for a different time at a different temperature depending on the particular use, specification of the finished product and the constitution of the battery cell. According to a particular embodiment of the present disclosure, the aging may be carried out for 1-6 days. In addition, the aging step may be carried out at room temperature or high temperature.

Meanwhile, according to an embodiment of the present disclosure, the battery subjected to the first charging step (S1) is a battery subjected no charging step after injecting the electrolyte thereto, and thus step (S1) is the first charging step applied after the injection of the electrolyte. According to another embodiment, the battery may be a battery subjected to pre-charging after injecting the electrolyte thereto, and may be a battery charged to a range of SOC of less than 1%. When pre-charging is carried out as mentioned above, the negative electrode potential is reduced so that dissolution of copper used as the negative electrode current collector may be inhibited, thereby effectively inhibiting the battery from realizing a low voltage.

After carrying out the activation step including steps (S1) to (S3) of the battery, a degassing step may be carried out as necessary in order to remove the gases remaining in the electrode assembly. Meanwhile, in the case of the battery obtained by the method for manufacturing a battery according to the present disclosure, the gases generated during the activation step are discharged from the electrode assembly and collected in a dead space inside of the battery casing. In other words, in the case of the battery obtained by the method for manufacturing a battery according to the present disclosure, it is less likely that the electrochemical elements, such as the electrode assembly, electrodes, or the like, in the battery are deformed by the residual gases, even when a separate degassing step is not carried out. Therefore, according to the method for manufacturing a battery disclosed herein, a degassing step of removing the gases generated during the activation step may be eliminated, which is favorable in terms of processing convenience. When using a metallic can as a battery casing, for example, in the case of a cylindrical battery or prismatic battery, it is not necessary to remove a cap assembly or to form and seal a separate hole in the casing for the purpose of degassing, according to the method for manufacturing a battery disclosed herein. Therefore, the method for manufacturing a battery according to the present disclosure provides high processing convenience.

Meanwhile, it is to be understood that the term 'activation' used herein refers to a process for supplying a predetermined amount of electricity to an electrode assembly or battery cell having no electrical characteristics to provide a positive electrode and negative electrode with electrical characteristics and covers all reactions included in the initial charging of the electrode assembly or battery cell. In other words, non-limiting examples of the reactions included in the initial charging include activation of the negative electrode, such as formation of a solid electrolyte interface (SEI) film, partial charging of battery capacity and lithiation of a carbonaceous negative electrode active material.

According to an embodiment of the present disclosure, the electrode assembly may include a negative electrode, a positive electrode and a separator interposed between the negative electrode and positive electrode.

The electrode assembly is introduced to the battery casing together with the electrolyte, and then the casing is sealed. The sealed secondary battery is pre-charged and activated by carrying out main charging and main discharging. According to an embodiment of the present disclosure, the battery casing may be made of a metallic material and may include a prismatic casing or a cylindrical casing.

The electrode assembly includes a negative electrode, a positive electrode and a separator, and may have a shape of stack with the separator interposed between the negative electrode and positive electrode. The methods for manufacturing the electrode assembly are not particularly limited, and any known method may be used. In addition, the electrode assembly is not particularly limited, as long as it has a structure including a negative electrode, a positive electrode and a separator interposed between the negative electrode and positive electrode. For example, the electrode assembly may have a jelly roll-like structure, a stacked structure or a stacked/folded structure.

According to an embodiment of the present disclosure, the negative electrode includes a current collector, and a negative electrode active material layer formed on the surface of the current collector. According to an embodiment of the present disclosure, the negative electrode is obtained by applying a negative electrode active material onto the current collector, followed by drying. If necessary, a binder and a conductive material may be further used.

According to the present disclosure, the negative electrode active material layer includes a negative electrode active material, a negative electrode binder and a conductive material. The negative electrode active material may include a carbonaceous material. The carbonaceous material may be at least one selected from the group consisting of crystalline artificial graphite, crystalline natural graphite, amorphous hard carbon, low-crystallinity soft carbon, carbon black, acetylene black, graphene and fibrous carbon. Preferably, the carbonaceous material may include crystalline artificial graphite and/or crystalline natural graphite. In addition, any material may be used, as long as it is used as a negative electrode active material for a secondary battery. For example, the negative electrode active material may further include any one selected from: lithium metal oxide; metal composite oxides, such as LiₓFe₂O₃ (0 ≤ x ≤ 1), LiₓWO₂ (0 ≤ x ≤ 1) and SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; titanium oxide; and lithium titanium oxide; or a mixture of two or more of them.

Meanwhile, when the negative electrode active material includes a carbonaceous material, for example, in the case of a battery including graphite, a solid electrolyte interface (SEI) film is formed during the initial charging process after manufacturing the battery. This is because the negative electrode surface is in contact with the electrolyte, while the negative electrode using graphite undergoes a decrease in electric potential during the initial charging, and thus oxidative-reductive decomposition of the electrolyte ingredients occurs at the interface. Herein, the decomposition products are deposited or adsorbed to the section of the negative electrode to form the SEI film.

Meanwhile, according to an embodiment of the present disclosure, the positive electrode includes a current collector, and a positive electrode active material layer formed on the surface of the current collector. According to an embodiment of the present disclosure, the positive electrode is obtained by applying a positive electrode active material onto the current collector, followed by drying. If necessary, a binder and a conductive material may be further used.

The positive electrode active material is not particularly limited, as long as it is used as a positive electrode active material in the art. For example, the positive electrode active material may include any one selected from the group consisting of LiCoO₂, LiNiO₂, LiMn₂O₄, LiCoPO₄, LiFePO₄, LiNiMnCoO₂ and LiNi_{1-x-y-z}CoₓM1_{y}M2_{z}O₂ (wherein each of M1 and M2 independently represents any one selected from the group consisting of Al, Ni, Co, Fe, Mn, V, Cr, Ti, W, Ta, Mg and Mo, each of x, y and z independently represents the atomic fraction of each element forming the oxide, 0 ≤ x < 0.5, 0 ≤ y < 0.5, 0 ≤ z < 0.5, and 0 ≤ x + y + z ≤ 1.5), or a mixture of two or more of them.

Meanwhile, the negative electrode current collector and positive electrode current collector are formed to have a thickness of 3-500 µm. The current collector is not particularly limited, as long as it causes no chemical change in the corresponding battery and has high conductivity. A suitable current collector may be selected depending on the electrode polarity. Particular examples of the current collector may include stainless steel, aluminum, copper, nickel, titanium, baked carbon, aluminum or stainless steel surface-treated with carbon, nickel, titanium or silver, or the like. In addition, fine surface irregularities may be formed on the surface of the current collector to enhance the adhesion to the electrode active material layer. The current collector may have various shapes, including a film, a sheet, a foil, a net, a porous body, a foam, a nonwoven fabric, or the like.

The binder resin is not particularly limited, as long as it is used conventionally for an electrode of a secondary battery. Particular examples of the binder resin include, but are not limited to: polyvinylidene fluoride homopolymer, polyvinylidene fluoride-co-hexafluoropropylene, polyvinylidene fluoride-co-trichloroethylene, polyvinylidene fluoride-co-chlorotrifluoroethylene, polyacrylate, polymethyl methacrylate, polybutyl acrylate, polyacrylonitrile, polyvinyl pyrro1idone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinyl alchol, cyanoethyl cellulose, cyanoethyl sucrose, pullulan, and carboxymethyl cellulose. Such binder resins may be used alone or in combination.

The conductive material is not particularly limited, as long as it is used as a conductive material for a secondary battery. Particular examples of the conductive material may include at least one selected from carbon black, acetylene black, ketjen black, channel black, furnace black, lamp black, carbon fibers, carbon nanotubes, powdery conductive metal, or the like.

The separator is not particularly limited, as long as it is an insulating film configured to insulate the negative electrode and positive electrode electrically from each other. According to an embodiment of the present disclosure, the separator is interposed between the positive electrode and negative electrode, and an insulating thin film having high ion permeability and mechanical strength may be used as the separator. The separator generally has a pore diameter of 0.01-10 µm and a thickness of 5-300 µm. For example, the separator may include sheets or non-woven fabrics made of chemically resistant and hydrophobic olefinic polymers, such as polyethylene, polypropylene, or glass fibers. Optionally, the separator may further include an inorganic coating layer formed on the outermost surface thereof and including inorganic particles in order to increase the heat resistance and stability of the separator.

Then, the electrode assembly is introduced to the battery casing, the electrolyte is injected thereto, and the battery casing is sealed to obtain a preliminary battery. Herein, 'preliminary battery' refers to a battery the activation step of which is not finished. After that, the activation step is carried out as described above to obtain a battery.

The battery casing may be selected suitably depending on the shape of the electrode assembly and particular use of the battery. For example, the battery casing may include a metallic can having a prismatic or cylindrical shape.

The electrolyte includes an organic solvent and a lithium salt.

The organic solvent is not particularly limited, as long as it is an ingredient used conventionally for an electrolyte in the art. According to an embodiment of the present disclosure, particular examples of the organic solvent include a linear carbonate, a cyclic carbonate, a linear ester and a linear ether.

According to an embodiment of the present disclosure, the cyclic carbonate may include any one selected from ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and halides thereof, or a mixture of two or more of them.

The cyclic carbonate may include dimethyl carbonate (DMC), diethyl carbonate (DEC), dipropyl carbonate, ethyl methyl carbonate (EMC), methyl propyl carbonate (MPC), ethyl propyl carbonate (EPC), or a mixture of two or more of them.

The linear ester may include methyl propionate, ethyl propionate, propyl propionate, butyl propionate, ethyl acetate, or a mixture of two or more of them.

The linear ether may include dimethyl ether, diethyl ether, dipropyl ether, methyl ethyl ether, methyl propyl ether, ethyl propyl ether, 1,2-dimethoxyethane, or a mixture of two or more of them.

The lithium salt may include any lithium salt used conventionally for an electrolyte for a lithium secondary battery and is not particularly limited, and particular examples of the lithium salt include LiPF₆, LiFSi, LiTFSi, LiBOB, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃, LiClO₄, or the like. Such lithium salts may be used alone or in combination.

In addition, the battery elements not described in detail herein may include any elements used conventionally in the field of secondary batteries.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example

### Manufacture of Battery

First, a positive electrode active material (LiNi_{0.5}Co_{0.2}Mn_{0.3}O₂), a conductive material (carbon black) and a binder (PVDF) were introduced to N-methyl-2-pyrlidone (NMP) at a weight ratio of 96:2:2 and mixed therein to prepare a positive electrode slurry. The resultant positive electrode slurry was coated on aluminum foil (thickness: 20 µm) as a positive electrode current collector at a capacity of 3.1 mAh/cm² to obtain a positive electrode.

Artificial graphite, a conductive material (carbon black) and a binder (PVDF) were introduced to N-methyl-2-pyrrolidone (NMP) at a weight ratio of 96:2:2 and mixed therein to prepare a negative electrode slurry, and the resultant negative electrode slurry was coated on copper foil (thickness: 20 µm) as a negative electrode current collector at a capacity of 3.1 mAh/cm² to obtain a negative electrode. A separator (made of polyethylene, thickness: 20 µm) was interposed between the negative electrode and the positive electrode to obtain a jelly-roll type electrode assembly. The electrode assembly was introduced to a battery casing, an electrolyte was injected thereto, and then the battery casing was sealed to obtain a battery. The electrolyte was prepared by adding LiPF₆ to an organic solvent containing ethylene carbonate (EC), ethyl methyl carbonate (EMC) and dimethyl carbonate (DMC) at a volume ratio of 20:20:60 at a concentration of 1.4 M. In addition, vinylene carbonate (3 vol%) and succinonitrile (1 vol%) were further added to the electrolyte.

In this manner, eight types of batteries according to Preparation Examples 1-8 were obtained. Each battery was subjected to an activation step as follows. The battery according to Preparation Example 1 was not subjected to the first charging step but subjected to the second charging step to SOC 65%. Each of the batteries according to Preparation Examples 2-8 was subjected to the first charging and aging steps as shown in the following Table 1. Then, each battery was subjected to the second charging step to SOC 65%. After that, a high-temperature aging step (60°C, 18 hours) and room-temperature aging step (12 hours) were carried out, and each battery was charged to SOC 100% (4.2 V) and discharged to SOC 0% (2.85 V). Each battery was discharged to 2.85 V in a constant current (CC) mode at 1 C and in a constant voltage (CV) mode at 0.2 C. Meanwhile, the SOC was determined by voltammetry.

**[Table 1]**

| | First charging (SOC, %) | Aging temperature after first charging (°C) | Aging time after first charging (hr) | Second charging (SOC, %) |
|---|---|---|---|---|
| Prep. Ex. 1 | - | - | - | 65% |
| Prep. Ex. 2 | 1% | 60°C | 1 | 65% |
| Prep. Ex. 3 | 3% | 60°C | 1 | 65% |
| Prep. Ex. 4 | 5% | 60°C | 1 | 65% |
| Prep. Ex. 5 | 7% | 60°C | 1 | 65% |
| Prep. Ex. 6 | 9% | 60°C | 1 | 65% |
| Prep. Ex. 7 | 10% | 60°C | 1 | 65% |
| Prep. Ex. 8 | 15% | 60°C | 1 | 65% |

### Test for Determination of Discharge Capacity

First, 4 samples of each of the batteries according to Preparation Examples 1-8 were prepared, and the discharge capacity of each sample was tested. Then, the average and standard deviation were determined as shown in the following Table 2. As can be seen from Table 2, in the case of Preparation Examples 4-7 (Examples 4-6) in which the first charging step is carried out to a range of SOC 5-10%, each battery shows a higher capacity as compared to the other Preparation Examples.

**[Table 2]**

| | Discharge capacity | |
|---|---|---|
| | Average (%) | Standard deviation (%) |
| Prep. Ex. 1 | 100.0 | 10.9 |
| Prep. Ex. 2 | 100.0 | 6.7 |
| Prep. Ex. 3 | 100.0 | 6.9 |
| Prep. Ex. 4 | 101.7 | 8.8 |
| Prep. Ex. 5 | 102.5 | 2.6 |
| Prep. Ex. 6 | 102.5 | 2.9 |
| Prep. Ex. 7 | 102.3 | 5.3 |
| Prep. Ex. 8 | 100.1 | 8.3 |

### Determination of Discharge Capacity Depending on Aging Time

The battery (Preparation Example 5) obtained under the condition of the first charging step of SOC 7% was determined in terms of discharge capacity depending on aging time after the first charging step. The result is shown in the following Table 3. Batteries were obtained in the same manner as Preparation Example 5, except that the aging time after the first charging step was changed. Each battery was subjected to the aging step at a temperature of 60°C after the first charging step, wherein the aging time was set to 10 minutes (Preparation Example 9), 2 hours (Preparation Example 10), 3 hours (Preparation Example 11) and 4 hours (Preparation Example 12). As compared to the battery using an aging time of 10 minutes, the battery using an aging time of 1 hour or more is shown to realize a discharge capacity of larger than 100%. However, as the aging time is increased, the battery elements are deteriorated or side reactions occur to cause a tendency of degradation of discharge capacity.

**[Table 3]**

| | Prep. Ex. 1 | Prep. Ex. 5 (Example) | Prep. Ex. 9 (Example) | Prep. Ex. 10 (Example) | Prep. Ex. 11 (Example) | Prep. Ex. 12 (Example) |
|---|---|---|---|---|---|---|
| Aging time after first charging | 0 hr | 1 hr | 10 minutes | 2 hr | 3 hr | 4 hr |
| Discharge capacity (%) | 100.0% | 102.5% | 99.9% | 102.4% | 102.3% | 102.3% |
| Remarks | Average of four battery samples | Average of four battery samples | Average of four battery samples | Average of four battery samples | Average of four battery samples | Average of four battery samples |

### Determination of Discharge Capacity Depending on Aging Temperature

The batteries (Preparation Examples 13 and 14) obtained under the condition of the first charging step of SOC 7% were determined in terms of discharge capacity depending on aging temperature after the first charging step. The result is shown in the following Table 4. The batteries were obtained in the same manner as Preparation Example 5, except that the aging temperature after the first charging step was changed. The batteries were subjected to an aging time for 1 hour at a temperature of 25°C and 40°C, respectively. Meanwhile, Preparation Example 15 was subjected to an aging step at a temperature of 25°C for 12 hours. It is shown that when the aging temperature is 60°C, the battery shows a higher discharge capacity as compared to the other cases. In addition, the test group shows a small deviation as a whole. Meanwhile, in the case of Test Group A, even though the aging is carried out for a long time, the aging temperature is low to provide a lower effect as compared to the effect determined under the condition of 60°C/1 hr.

**[Table 4]**

| | Prep. Ex. 1 | Prep. Ex. 5 (Example) | Prep. Ex. 13 | Prep. Ex. 14 | Prep. Ex. 15 |
|---|---|---|---|---|---|
| Aging temperature after first charging (°C) | - | 60°C | 25°C | 40°C | 25°C |
| Discharge capacity (%) | 100.0% | 102.5% | 99.9% | 101.2% | 100.1% |
| Remarks | Average of four battery samples | Average of four battery samples Aging is carried out for 1 hr. | Average of four battery samples Aging is carried out for 1 hr. | Average of four battery samples Aging is carried out for 1 hr. | Average of four battery samples Test Group (A) Aging is carried out at 25°C for 1 hr. |

### Comparison and Evaluation of Charging Uniformity

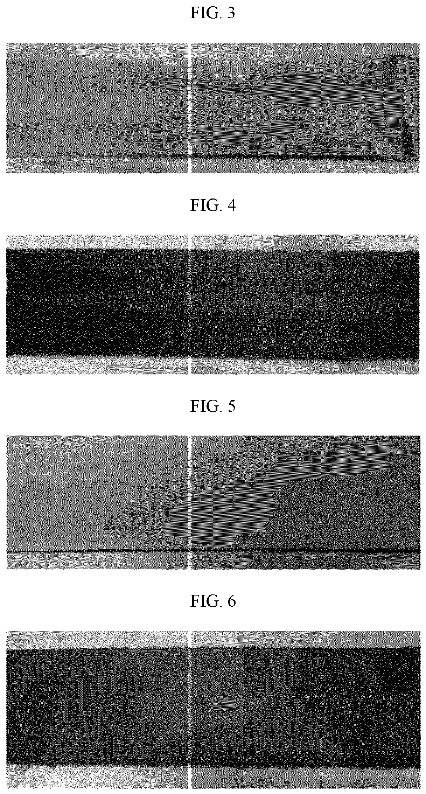

Each of the batteries according to Preparation Examples 1 and 5 was disassembled, the positive electrode was removed, and then the shape of the separator and the negative electrode was checked. FIG. 3 illustrates the separator of the battery according to Preparation Example 1, and FIG. 4 illustrates the negative electrode of the battery according to Preparation Example 1. In addition, FIG. 5 illustrates the separator of the battery according to Preparation Example 5, and FIG. 6 illustrates the negative electrode of the battery according to Preparation Example 5. It can be seen that the battery according to Preparation Example 1 shows non-uniform charging, the electrode and the separator cannot be adhered closely to each other, and there is a gap therebetween. However, the battery according to Preparation Example 5 does not show non-uniform charging, and there is no gap between the electrode and the separator.

## Claims

1. A method for manufacturing a secondary battery, comprising the steps of:
(S1) a first charging step of charging a battery comprising an electrode assembly and an electrolyte received in a battery casing;
(S2) an aging step of allowing the product of step (S1) to stand under the condition of 30-80°C for a predetermined time; and
(S3) a second charging step of charging the product of step (S2),
wherein the first charging step (S1) is carried out by charging the battery to a range of SOC (state-of-charge) of 5 % to less than 10 %.

2. The method for manufacturing a secondary battery according to claim 1, wherein the battery is maintained at an SOC equal to or more than 0% and less than 1%, before carrying out the step (S1).

3. The method for manufacturing a secondary battery according to claim 1, which further comprises a pre-charging step of charging the battery to a range of SOC of less than 1%, before carrying out the step (S1).

4. The method for manufacturing a secondary battery according to claim 1, wherein the step (S3) comprises the steps of:
(S3a) charging the battery to an SOC of less than 100%;
(S3b) an aging step of allowing the product of step (S3a) to stand for a predetermined time; and
(S3c) charging the product of step (S3b) to an SOC of 100%.

5. The method for manufacturing a secondary battery according to claim 1, wherein the aging in the step (S2) is carried out for 0.5 hours or more.

6. The method for manufacturing a secondary battery according to claim 1, wherein the electrode assembly prepared in the step (S1) comprises a negative electrode, a positive electrode and a separator interposed between the negative electrode and the positive electrode, the positive electrode comprises a lithium composite metal oxide as a positive electrode active material, and the battery casing has a prismatic or cylindrical shape.

7. The method for manufacturing a secondary battery according to claim 1, wherein the electrolyte in the step (S1) comprises an organic solvent and a lithium salt, and the organic solvent comprises at least one of linear carbonates, linear esters and linear ethers.

8. The method for manufacturing a secondary battery according to claim 6, wherein the negative electrode comprises, as a negative electrode active material, any one selected from a carbonaceous material, lithium metal oxide, lithium alloy, silicon-based alloy, tin-based alloy, lithium titanium oxide or two or more elements of them.

9. The method for manufacturing a secondary battery according to claim 1, wherein the aging in the step (S2) is carried out for 10 hours or less.

10. The method for manufacturing a secondary battery according to claim 4, wherein the step (S3a) is carried out to any one point within a range of SOC 50-80%.

## Patentansprüche

1. Verfahren zur Herstellung einer Sekundärbatterie, umfassend die Schritte:
(S1) einen ersten Ladeschritt des Ladens einer Batterie, die eine Elektrodenanordnung und einen in einem Batteriegehäuse aufgenommenen Elektrolyten umfasst;
(S2) einen Alterungsschritt des Stehenlassens des Produkts von Schritt (S1) unter der Bedingung von 30-80 °C für eine vorbestimmte Zeit; und
(S3) einen zweiten Ladeschritt des Ladens des Produkts von Schritt (S2),
wobei der erste Ladeschritt (S1) durch Laden der Batterie auf einen Bereich von SOC (Ladezustand) von 5 % bis weniger als 10 % durchgeführt wird.

2. Verfahren zur Herstellung einer Sekundärbatterie nach Anspruch 1, wobei die Batterie auf einem SOC von gleich oder mehr als 0 % und weniger als 1 % gehalten wird, bevor der Schritt (S1) durchgeführt wird.

3. Verfahren zur Herstellung einer Sekundärbatterie nach Anspruch 1, das ferner einen Vorladeschritt des Ladens der Batterie auf einen Bereich von SOC von weniger als 1 % umfasst, bevor der Schritt (S1) durchgeführt wird.

4. Verfahren zur Herstellung einer Sekundärbatterie nach Anspruch 1, wobei der Schritt (S3) die Schritte umfasst:
(S3a) Laden der Batterie auf einen SOC von weniger als 100 %;
(S3b) einen Alterungsschritt des Stehenlassens des Produkts von Schritt (S3a) für eine vorbestimmte Zeit; und
(S3c) Laden des Produkts von Schritt (S3b) auf einen SOC von 100 %.

5. Verfahren zur Herstellung einer Sekundärbatterie nach Anspruch 1, wobei die Alterung in Schritt (S2) für 0,5 Stunden oder mehr durchgeführt wird.

6. Verfahren zur Herstellung einer Sekundärbatterie nach Anspruch 1, wobei die in Schritt (S1) hergestellte Elektrodenanordnung eine negative Elektrode, eine positive Elektrode und einen zwischen der negativen Elektrode und der positiven Elektrode angeordneten Separator umfasst, die positive Elektrode ein Lithiumverbundmetalloxid als aktives Material der positiven Elektrode umfasst und das Batteriegehäuse eine prismatische oder zylindrische Form aufweist.

7. Verfahren zur Herstellung einer Sekundärbatterie nach Anspruch 1, wobei der Elektrolyt in Schritt (S1) ein organisches Lösungsmittel und ein Lithiumsalz umfasst und das organische Lösungsmittel mindestens eines von linearen Carbonaten, linearen Estern und linearen Ethern umfasst.

8. Verfahren zur Herstellung einer Sekundärbatterie nach Anspruch 6, wobei die negative Elektrode als aktives Material der negativen Elektrode eines umfasst, das ausgewählt ist aus einem kohlenstoffhaltigen Material, Lithiummetalloxid, Lithiumlegierung, Legierung auf Siliciumbasis, Legierung auf Zinnbasis, Lithiumtitanoxid oder zwei oder mehr Elementen davon.

9. Verfahren zur Herstellung einer Sekundärbatterie nach Anspruch 1, wobei die Alterung in Schritt (S2) für 10 Stunden oder weniger durchgeführt wird.

10. Verfahren zur Herstellung einer Sekundärbatterie nach Anspruch 4, wobei der Schritt (S3a) an einem beliebigen Punkt innerhalb eines Bereichs von SOC 50-80 % durchgeführt wird.

## Revendications

1. Procédé de fabrication d'une batterie secondaire comprenant les étapes suivantes :
(S1) une première étape de charge comportant la charge d'une batterie comprenant un ensemble d'électrodes et un électrolyte reçu dans un boîtier de batterie ;
(S2) une étape de vieillissement, dans le cadre duquel on laisse reposer le produit de l'étape (S1) sous une température de 30 à 80 °C pendant une durée prédéterminée ; et
(S3) une deuxième étape de charge comportant la charge du produit de l'étape (S2),
la première étape de charge (S1) comportant l'exécution de la charge de la batterie à un niveau de charge dans une plage allant de 5 % à moins de 10 %.

2. Procédé de fabrication d'une batterie secondaire selon la revendication 1, la batterie étant maintenue à un niveau de charge égal ou supérieur à 0 % et inférieur à 1 %, avant l'exécution de l'étape (S1).

3. Procédé de fabrication d'une batterie secondaire selon la revendication 1, comprenant en outre une étape de précharge comportant la charge de la batterie à un niveau de charge inférieur à 1 %, avant l'exécution de l'étape (S1).

4. Procédé de fabrication d'une batterie secondaire selon la revendication 1, l'étape (S3) comprenant les étapes suivantes :
(S3a) charge de la batterie à un niveau de charge inférieur à 100 %;
(S3b) étape de vieillissement consistant à laisser le produit de l'étape (S3a) reposer pendant une durée prédéterminée ; et
(S3c) charge du produit de l'étape (S3b) à un niveau de charge de 100 %.

5. Procédé de fabrication d'une batterie secondaire selon la revendication 1, le vieillissement à l'étape (S2) étant effectué pendant 0,5 heure ou davantage.

6. Procédé de fabrication d'une batterie secondaire selon la revendication 1, l'ensemble d'électrodes préparé à l'étape (S1) comprenant une électrode négative, une électrode positive et un séparateur intercalé entre l'électrode négative et l'électrode positive, l'électrode positive comprenant un oxyde métallique composite de lithium en tant que matériau actif de l'électrode positive, et le boîtier de la batterie ayant une forme prismatique ou cylindrique.

7. Procédé de fabrication d'une batterie secondaire selon la revendication 1, l'électrolyte à l'étape (S1) comprenant un solvant organique et un sel de lithium, et le solvant organique comprend au moins un de carbonates linéaires, esters linéaires et éthers linéaires.

8. Procédé de fabrication d'une batterie secondaire selon la revendication 6, l'électrode négative comprenant, en tant que matériau actif d'électrode négative, tout matériau sélectionné parmi les suivants : un matériau carboné, de l'oxyde métallique de lithium, un alliage de lithium, un alliage à base de silicium, un alliage à base d'étain, de l'oxyde de lithium-titane ou deux ou plusieurs de leurs éléments.

9. Procédé de fabrication d'une batterie secondaire selon la revendication 1, le vieillissement à l'étape (S2) étant effectué pendant 10 heures ou moins.

10. Procédé de fabrication d'une batterie secondaire selon la revendication 4, l'étape (S3a) étant effectuée en un point quelconque dans une plage de niveau de charge allant de 50 à 80%.
